Europäisches Patentamt

European Patent Office

Office européen des brevets

(19)

(11) Numéro de publication : **0 057 637**
**B1**

# FASCICULE DE BREVET EUROPÉEN

(12)

(45) Date de publication du fascicule du brevet :
15.08.84

(21) Numéro de dépôt : **82400139.0**

(22) Date de dépôt : **26.01.82**

(51) Int. Cl.³ : **B 29 D 3/02, C 04 B 35/52,
F 16 S 1/14, E 04 B 2/46**

(54) **Nouvelle structure composite et procédé et matrice destinés à la fabrication d'une telle structure.**

(30) Priorité : 29.01.81 FR 8101733

(43) Date de publication de la demande :
11.08.82 Bulletin 82/32

(45) Mention de la délivrance du brevet :
15.08.84 Bulletin 84/33

(84) Etats contractants désignés :
**DE GB IT SE**

(56) Documents cités :
**EP-A- 0 032 858
FR-A- 2 398 705
FR-A- 2 433 003
FR-A- 2 446 175
US-A- 2 106 177**

(73) Titulaire : **SOCIETE EUROPEENNE DE PROPULSION
Société Anonyme dite:
3, Avenue du Général de Gaulle
F-92800 Puteaux (FR)**

(72) Inventeur : **Maistre, Michel Antoine
19, rue d'Austerlitz
F-33200 Bordeaux (FR)**

(74) Mandataire : **Joly, Jean Jacques et al
CABINET BEAU DE LOMENIE 55, rue d'Amsterdam
F-75008 Paris (FR)**

## Description

La présente invention se rapporte à la construction d'une structure composite du type comportant des éléments de renfort linéaires formant des faisceaux différents constitués chacun d'une pluralité d'éléments de renfort parallèles à une même direction particulière et répartis dans tous le volume de la structure et une matrice remplissant au moins partiellement le volume de la structure entre les éléments de renfort.

Des structures composites de ce type sont bien connues. Elles sont notamment utilisées pour réaliser des pièces devant subir des contraintes mécaniques et thermiques sévères, par exemple des pièces de tuyères de moteurs fusées, le matériau constitutif des éléments de renfort et de la matrice étant alors généralement le carbone.

De telles structures connues sont décrites dans les demandes de brevet français n° 2 276 916, 2 424 888 et 2 444 012. Ces demandes de brevet sont relatives à des dispositions des éléments de renfort suivant quatre faisceaux, ou plus, de directions différentes, pour former une structure de renfort qui est ensuite densifiée par introduction du matériau constitutif de la matrice pour obtenir la structure composite. Il est donc nécessaire d'assembler dans l'espace les éléments de renfort entre eux afin d'obtenir une structure de renfort ayant une cohésion suffisante pour garder son intégrité au cours des phases ultérieures de densification, tout en veillant à conserver une accessibilité suffisante à tous les interstices entre éléments de renfort pour le matériau de la matrice. La formation de la matrice, ou densification, est alors effectuée par des procédés tels que le dépôt chimique en phase vapeur du matériau de la matrice, ou l'imprégnation par un produit liquide ou pâteux donnant par durcissement ultérieur le matériau de la matrice. Le durcissement peut, suivant les cas, se produire spontanément (par exemple : la prise du ciment ou la polymérisation des résines de type R.T.V. ou la solidification d'une matière introduite à l'état fondu) ou être obtenu par un traitement thermique ou physique convenable (par exemple polymérisation à chaud des résines thermodurcissables ou cokéfaction de résine ou de brai par pyrolyse).

Ce remplissage des interstices entre les éléments de renfort par une matière introduite à l'état fluide (gazeux, liquide ou pâteux) peut être précédé du remplissage partiel de ces interstices par une matière solide introduite à l'état pulvérulent.

Ces procédés connus pour fabriquer des composites à renfort multidirectionnel qui consistent à élaborer la matrice *in situ* à partir de matières premières introduites à l'état fluide ou pulvérulent dans la structure de renfort préalablement assemblée imposent des limitations dans le choix des matières utilisables comme matrice et dans la qualité des matériaux qui peuvent être ainsi élaborés.

En outre, dans certains cas, spécialement pour la fabrication de composites carbone-carbone, la densification nécessite la mise en œuvre répétée de ces procédés au cours de cycles successifs dans des conditions particulières de température et de pression. La densification est de ce fait longue et coûteuse à réaliser.

En vue de faciliter l'opération de densification, il a été proposé de réaliser des substrats au moyen de procédés consistant à : empiler des nappes de fibres unidirectionnelles ou bidirectionnelles, chaque nappe étant constituée par des fibres liées entre elles par un liant et étant perforée ; disposer les nappes dans l'empilement de sorte que les perforations soient alignées et que les fibres s'étendent suivant deux ou trois directions différentes ; et introduire des mèches ou baguettes dans les logements parallèles entre eux formés par les perforations alignées. Ensuite, le substrat est densifié après élimination éventuelle du liant. De tels procédés d'élaboration de substrat sont décrits notamment dans les demandes de brevet français 2 398 705 et 2 433 003. Il s'agit là de procédés permettant de simplifier et, éventuellement, d'automatiser la fabrication de la texture de renfort du matériau composite à réaliser, la matrice dans sa totalité ou quasi-totalité étant déposée ultérieurement par des opérations classiques de densification. En outre, on notera que le faisceau de mèches ou baguettes introduites dans les perforations alignées ne réalise en aucune façon un quelconque verrouillage des nappes empilées. Il est alors nécessaire de maintenir la cohésion du substrat, par exemple au moyen d'un outillage, lors de la densification.

La présente invention a pour but d'échapper aux limitations imposées par les procédés connus, et de fournir un procédé de fabrication de structures composites simple et rapide afin de permettre la production de structures composites, du type défini en tête de la description, avantageuses en ce qui concerne le prix de revient et/ou la qualité.

Ce but est atteint au moyen d'un procédé selon lequel on utilise des parties de structure solides préfabriquées et présentant chacune au moins une cavité s'étendant d'un côté à un autre de la partie de structure, l'on juxtapose les parties de structure de sorte que leurs cavités soient dans le prolongement les unes des autres et forment des logements rectilignes, et l'on introduit des éléments de renfort dans au moins une partie des logements rectilignes, lequel procédé étant caractérisé en ce que, conformément à l'invention, l'on juxtapose des parties des éléments de matrice de forme prismatique ou parallélépipédique dont les cavités sont orientées de manière à former, après juxtaposition des éléments de matrice, au moins quatre groupes de logements rectilignes constitués chacun d'une pluralité de logements parallèles à une même direction et répartis dans tout le volume occupé par les éléments de matrice juxtaposés, les directions des groupes de logements étant différentes les unes des autres et telles que, quel que soit le plan de l'espace considéré, il y en a toujours deux non parallèles entre elles et à ce plan, et

— l'on introduit ensuite des éléments de renfort dans au moins une partie des logements de chaque groupe, de sorte que les éléments de renfort réalisent un verrouillage de l'assemblage d'éléments de matrice pour former une structure composite cohérente.

Ainsi, une caractéristique de l'invention consiste dans la réalisation d'abord de la matrice, au moyen d'éléments préfabriqués, avant la mise en place des éléments de renfort linéaires. L'obtention d'une matrice homogène est donc beaucoup plus facile et ne nécessite pas les coûteuses et longues opérations qui sont parfois nécessaires lorsque la structure composite est obtenue par densification d'une structure de renfort multidirectionnelle préalablement construite.

Les éléments de renfort jouent le rôle de chevilles assurant simultanément le positionnement et l'assemblage des éléments de matrice préalablement juxtaposés, ce qui rend la fabrication de la structure composite simple et rapide. Quel que soit le plan de la structure considéré, il y a toujours deux faisceaux de renfort qui ne sont pas parallèles à ce plan et dont les directions sont différentes l'une de l'autre. Aussi, les éléments de renfort réalisent un véritable verrouillage des éléments de matrice et éliminent tout risque de décohésion.

La structure composite fabriquée selon l'invention peut constituer en soi un produit achevé utilisable tel quel, en particulier pour la réalisation d'objets ou d'édifices cohérents sans liant et éventuellement démontables. Par rapport aux procédés de construction mis en œuvre dans le domaine du bâtiment et utilisant des blocs préfabriqués empilés munis de rainures qui ménagent des logements continus pour des armatures verticales et horizontales formant un renfort de type bidimensionnel (comme décrit notamment dans le brevet US 2 106 177 et les demandes de brevet DE 2 003 316 et FR 2 134 115), le procédé conforme à l'invention se distingue en ce que :

— les éléments de matrice sont juxtaposés de manière à former des logements rectilignes dans au moins quatre directions différentes telles que, quel que soit le plan considéré, il y en a toujours deux non parallèles entre elles et à ce plan, ce qui implique que les éléments de matrice sont, non pas seulement empilés, mais juxtaposés sur toutes leurs faces (s'ils sont parallélépipédiques) ou sur au moins toutes leurs faces latérales (s'ils sont prismatiques),

— les éléments de renfort introduits sont dans les logements pour former un renfort de type tridimensionnel au moins quadri-directionnel, et

— les éléments de renfort verrouillent entre eux les éléments de matrice et permettent d'obtenir une structure cohérente sans nécessiter l'introduction de liant.

Selon une particularité du procédé selon l'invention, la structure composite peut être soumise, après sa construction, à un traitement mécanique et/ou thermique destiné à modifier la compacité de l'assemblage ou les propriétés de ses constituants ou de leur association, selon l'utilisation envisagée. Un tel traitement ultérieur peut consister notamment en une opération de forgeage.

Selon une autre particularité du procédé selon l'invention, la structure composite peut être le cas échéant complétée, après sa construction, par l'adjonction d'un ou plusieurs constituants comblant tout ou partie de chaque espace libre entre éléments de matrice et de renfort et assurant leur liaison. On obtient de cette manière des matériaux composites plus particulièrement adaptés aux applications impliquant des contraintes mécaniques et thermiques sévères (par exemple, des matériaux composites réfractaires utilisés dans la construction des tuyères de moteurs fusées et des corps de rentrée), car ils présentent alors une très grande cohésion par suite de la présence d'une structure de renfort multidirectionnelle étroitement associée à une matrice. Cette dernière est formée pour la plus grande partie par les éléments de matrice mis en place à l'état solide lors de la construction de la structure composite, et, pour le reste, par la matière introduite après cette construction. Cette matière ne peut être introduite qu'à l'état fluide ou à l'état pulvérulent. L'introduction peut être réalisée par l'un des procédés connus évoqués plus haut, à savoir le dépôt chimique en phase vapeur ou l'imprégnation par un produit liquide ou pâteux suivie de traitement de durcissement. On notera que ces procédés connus ne sont alors utilisés qu'en complément d'une matrice formée d'éléments solides juxtaposés et ne sont pas nécessaires à l'obtention d'une structure composite cohérente.

Avantageusement, les éléments de matrice sont identiques entre eux. Ils peuvent être formés de blocs parallélépipédiques ou de barreaux prismatiques. L'assemblage des éléments de matrice peut être compact ; il ne subsiste alors pas d'espaces libres entre éléments de matrice et les seuls vides sont ceux formés par les cavités des éléments. On peut toutefois, selon l'application envisagée, juxtaposer les éléments de matrice de manière à laisser dans l'assemblage des espaces libres par exemple des emplacements d'éléments de matrice inoccupés.

Par cavité formée dans un élément de matrice, on entend ici notamment un trou, une rainure ou une encoche qui s'étend d'un côté de l'élément à un autre côté de cet élément. Avantageusement, chaque élément de matrice comporte des cavités orientées suivant au moins quatre directions différentes afin de recevoir au moins un élément de renfort de chaque faisceau.

Les logements que forment les cavités des éléments de matrice juxtaposés sont de préférence continus, c'est-à-dire que chaque logement s'étend sans interruption d'un côté à un autre de la matrice. Des éléments de renfort sont introduits dans tous ces logements et sur toute la longueur de ceux-ci, ou seulement dans une partie des logements. Dans ce dernier cas, un ou plusieurs des logements sont libres d'éléments de renfort sur toute ou partie de leur longueur. On notera en outre que certains au moins des éléments de renfort peuvent être discontinus, un logement étant alors occupé par plusieurs tronçons d'éléments de renfort placés bout à bout. Par ailleurs, chaque élément de renfort s'inscrit, de préférence exactement, à l'intérieur du périmètre de la section transversale de chaque cavité qu'il occupe.

L'invention a non seulement pour objet un procédé de fabrication d'une structure composite, mais vise également une matrice destinée à la fabrication d'une structure composite et telle qu'obtenue par l'assemblage d'éléments de matrice comme définis ci-dessus, ainsi qu'une structure composite telle qu'obtenue par le procédé défini plus haut.

D'autres particularités du procédé, de la matrice et de la structure composite conformes à l'invention ressortiront à la lecture de la description faite ci-après, à titre indicatif mais non limitatif, en référence aux dessins joints qui illustrent :

figure 1 une vue en perspective d'un premier mode de réalisation d'un élément de matrice pour la fabrication d'une structure composite conformément à l'invention ;

figure 2 une vue en prespective montrant partiellement quatre éléments de renfort passant dans les encoches de l'élément de matrice de la figure 1 ;

figure 3 une vue partielle d'une structure composite comprenant une matrice formée à partir d'éléments tels que celui illustré par la figure 1 ;

figure 4 une vue en perspective d'un deuxième mode de réalisation d'un élément de matrice, conformément à l'invention ;

figure 5 une vue en perspective montrant des éléments de renfort passant dans les trous de l'élément de matrice de la figure 4 ;

figure 6 une vue partielle d'une structure composite comprenant une matrice formée à partir d'éléments tels que celui illustré par la figure 4 ;

figure 7 une vue en perspective d'un troisième mode de réalisation d'un élément de matrice, conformément à l'invention ;

figure 8 une vue en perspective montrant des éléments de renfort logés dans les rainures de l'élément de matrice de la figure 7 ;

figure 9 une vue partielle d'une structure composite comprenant une matrice formée à partir d'éléments tels que celui illustré par la figure 7 ;

figures 10, 12 et 13 trois vues en perspective montrant des variantes de réalisation d'un élément de matrice du type de celui illustré par la figure 7 ;

figures 11 et 14 deux vues en perspective montrant des éléments de renfort logés dans les rainures des éléments de matrices illustrés respectivement par les figures 10 et 13 ;

figure 15 une vue en perspective d'un quatrième mode de réalisation d'un élément de matrice, conformément à l'invention ;

figure 16 une vue en perspective montrant des éléments de renfort logés dans les rainures et trous de l'élément de matrice de la figure 15 ; et

figure 17 une vue partielle d'une structure composite comprenant une matrice formée à partir d'éléments tels que celui illustré par la figure 15.

Les exemples qui suivent vont illustrer plusieurs modes de réalisation de la structure composite selon l'invention.

Exemple 1

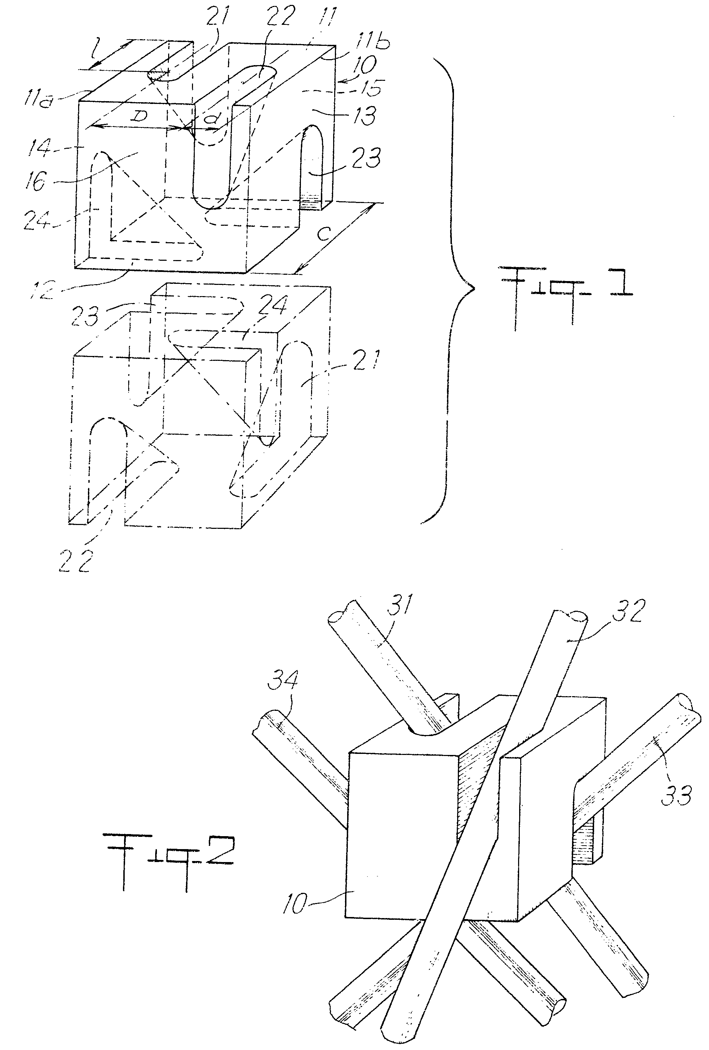

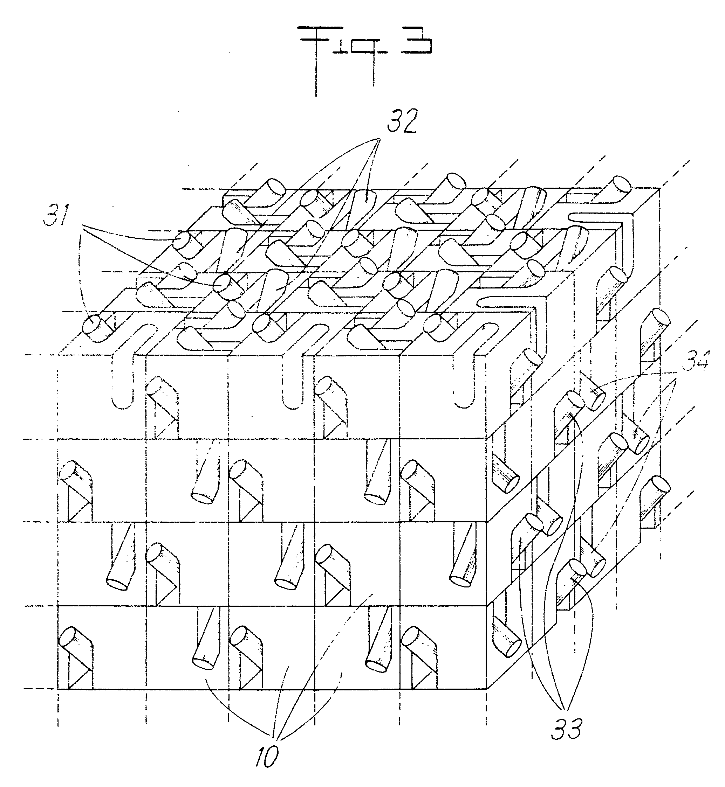

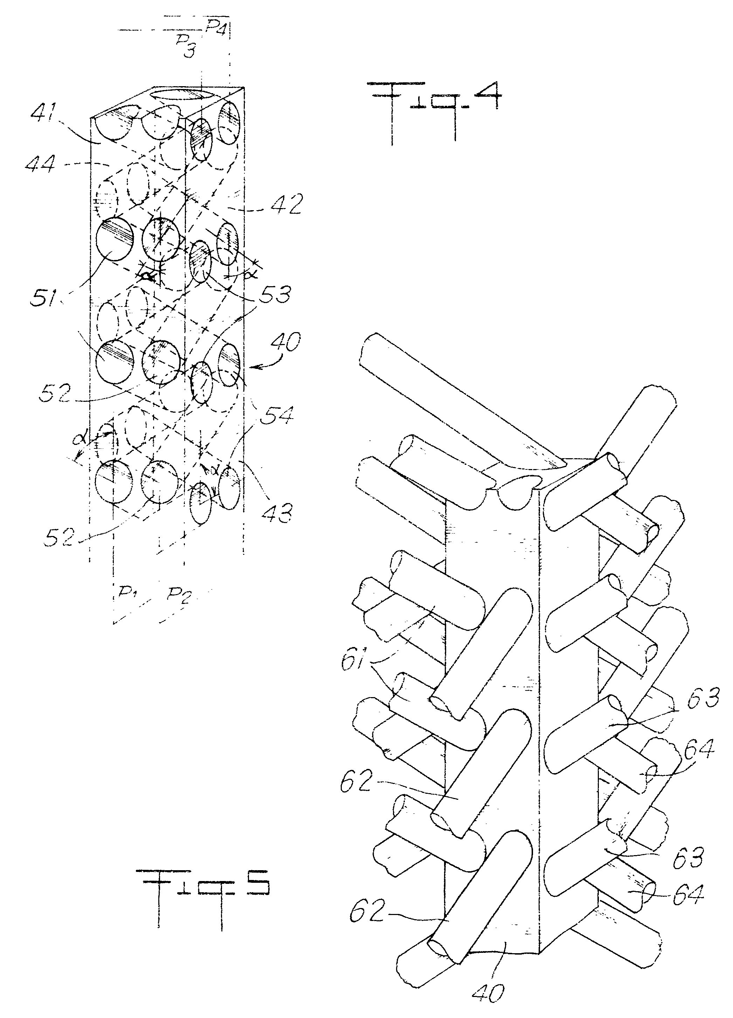

Une construction cohérente de dimensions quelconques est réalisée sans liant au moyen d'éléments de matrice en forme de briques 10 cubiques de 10 cm de côté, comportant chacune quatre encoches comme représenté sur la figure 1, ces briques étant empilées et liées entre elles par des éléments de renfort en forme de barres cylindriques à section circulaire de 2 cm de diamètre, comme représenté sur la figure 3.

Chaque brique 10 comporte quatre encoches 21, 22, 23, 24 destinées à recevoir quatre éléments de renfort respectivement parallèles aux quatre diagonales de deux faces adjacentes du cube 10, comme le montre la figure 2.

Les encoches sont perpendiculaires à quatre arêtes du cube, l'arête opposée à une arête coupée par une encoche n'étant elle-même pas coupée par une encoche. Deux faces opposées 11, 12 du cube 10 sont intéressées chacune par deux encoches, respectivement 21-22, 23-24. Les autres faces 13, 14, 15, 16 du cube ne sont intéressées chacune que par une encoche, respectivement 23, 24, 21, 22.

Les encoches d'un même cube sont mutuellement décalées afin que les éléments de renfort placés dans les encoches n'interfèrent pas entre eux. Ainsi, les encoches 21, 22 qui débouchent toutes deux sur la face 11 et sont parallèles aux côtés 11a, 11b, de cette face ont des plans de symétrie longitudinaux différents. Il en est de même pour les encoches 23, 24 qui débouchent toutes deux sur la face 12.

On notera que les faces 11, 12 du cube ne sont pas identiques car si l'on retourne le cube, la face 12 n'est pas superposable à la face 11. En fait, la face 11 décrit un S tandis que la face 12 décrit un Z (ou N). Un cube 10 en position retournée est représenté en traits mixtes sur la figure 1.

La figure 2 montre comment quatre barres cylindriques 31, 32, 33, 34 d'orientations différentes sont logées respectivement dans les quatre encoches 21, 22, 23, 24 d'un cube 10.

La figure 3 montre une structure composite formée de cubes 10 empilés et juxtaposés et de barres cylindriques formant quatre faisceaux de directions différentes, les barres de chaque faisceau étant parallèles entre elles et régulièrement espacées. On remarquera que chaque cube 10 est traversé par une barre de chaque faisceau.

Les cubes 10 sont assemblés de manière que deux cubes adjacents soient en position retournée l'un par rapport à l'autre. Ainsi, si l'on se réfère à la figure 1, l'orientation du cube représenté en traits mixtes se déduit de celle du cube représenté au-dessus en traits pleins par un simple retournement autour d'un axe perpendiculaire soit aux faces 13 et 14, soit aux faces 15 et 16. Les encoches des cubes empilés déterminent des passages pour le logement des barres cylindriques, chaque passage étant formé par des encoches situées dans le prolongement les unes des autres.

A cet effet, chaque encoche a une largeur au moins égale, et de préférence égale, au diamètre d'une barre cylindrique. En outre, le plan longitudinal médian d'une encoche est situé à une distance d de la face parallèle du cube la plus proche, dont la valeur est la même pour toutes les encoches. Cette distance d est de préférence égale à la moitié de la distance D séparant les plans longitudinaux médians des encoches 21, 22, ou 23, 24. La distance d est alors égale au quart de la longueur des arêtes du cube. De cette façon, les barres cylindriques 31, 32 forment des nappes parallèles alternées équidistantes, de même que les barres cylindriques 33, 34. Enfin, la longueur 1 des ouvertures des encoches sur les faces du cube 10 mesurée depuis l'arête qu'elles coupent jusqu'à l'axe de leur fond semi-cylindrique est au moins égale à la moitié de la longueur c des arêtes du cube. Les encoches des cubes juxtaposés forment ainsi des passages suffisants pour les barres cylindriques. En choisissant 1 = c/2, on obtient juste le passage nécessaire pour les barres cylindriques. Celles-ci sont alors logées exactement au fond des encoches et sont en contact sur toute leur longueur avec des briques 10 alternativement d'un côté et de l'autre d'un même plan longitudinal de symétrie. Les barres 31, 32, 33, 34 réalisent alors un véritable verrouillage des briques 10 empilées, à la manière de chevilles.

On obtient ainsi une structure composite cohérente sans nécessiter l'utilisation de liant, structure dont la matrice est constituée par l'empilage des briques 10 et dont la structure de renfort est du type 4D, c'est-à-dire formée d'éléments de renfort formant quatre faisceaux de directions différentes (4D), les éléments de chaque faisceau étant parallèles entre eux et disposés régulièrement dans tout le volume de la structure. Sur la figure 3, les quatre faisceaux sont formés respectivement par les barres 31, les barres 32, les barres 33 et les barres 34.

Les briques 10 peuvent être réalisées directement par moulage. Une application typique de ce genre de construction est la réalisation de fours, ou plus généralement de chambres chaudes au moyen de briques réfractaires assemblées par des barres elles-mêmes réfractaires.

Exemple 2

On obtient un matériau composite de type métal/métal en associant étroitement une structure multidirectionnelle de renfort en métal à hautes caractéristiques mécaniques à une matrice en métal ductile. La matrice est formée de barreaux percés en métal ductile et la structure de renfort par quatre faisceaux de tiges cylindriques en métal à hautes caractéristiques mécaniques.

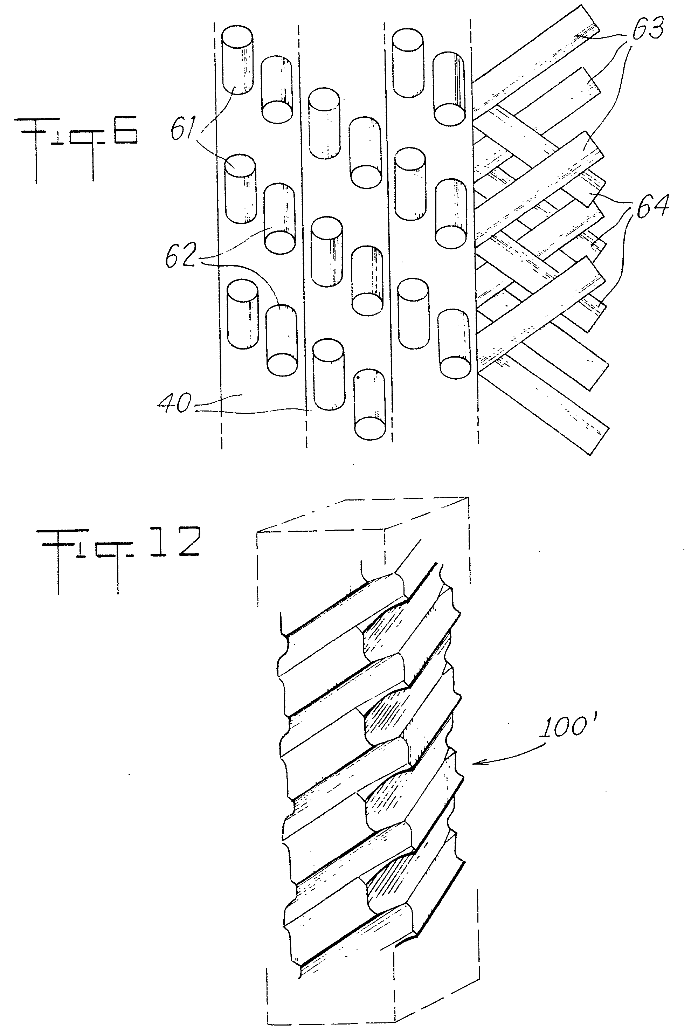

Un barreau 40 est représenté sur la figure 4. Il est constitué par un prisme de section carrée de 5 mm de côté par exemple. Le prisme est traversé de trous destinés à recevoir sans jeu quatre séries de tiges cylindriques de 2 mm de diamètre par exemple.

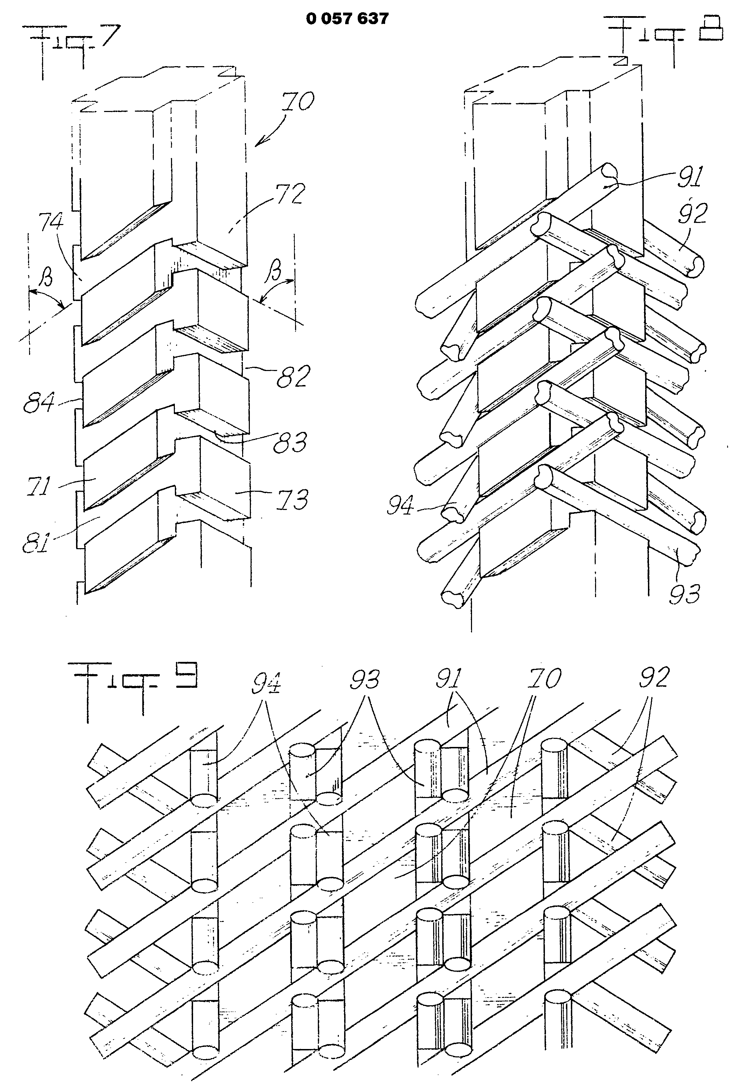

Comme on peut le voir sur les figures 4 et 5, deux séries de trous 51, 52 traversent le barreau 40 en débouchant sur deux faces opposées 41, 42 de celui-ci. Les axes des trous 51 sont dans un même plan P1 parallèle aux autres faces 43, 44 du barreau et font avec la face 41 un même angle α différent de 90°. Les axes des trous 52 sont dans un autre plan P2 parallèle aux faces 43, 44 et font aussi avec la face 41 un angle mais les directions des axes des trous 51 et 52 sont symétriques l'une de l'autre par rapport à une normale aux faces 41, 42.

De la même manière, deux séries de trous 53, 54 traversent le barreau 40 en débouchant sur les faces 43, 44. Les axes des trous 53 et 54 sont dans deux plans P3, P4 parallèles aux faces 41, 42 et font des angles α différents de 90° avec la face 43, les axes des trous 53 ayant une orientation symétrique de celle des axes des trous 54 par rapport à une normale aux faces 43, 44. L'inclinaison des axes des différents trous par rapport aux faces sur lesquelles ils débouchent est par exemple 55°, les axes des trous dans chaque série étant équidistants, par exemple avec un pas p de 7 mm dans la direction longitudinale du barreau.

La figure 5 montre quatre séries de tiges cylindriques 61, 62, 63, 64 insérées dans les trous 51, 52, 53, 54.

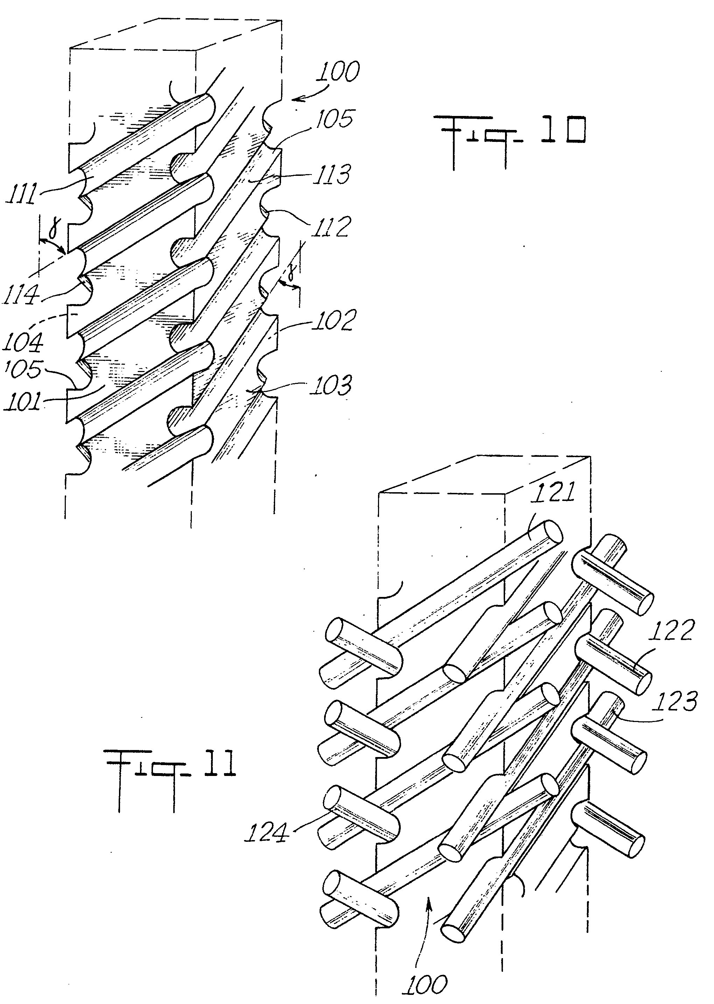

Une structure composite est construite en juxtaposant des barreaux 40 identiques, deux barreaux adjacents étant décalés dans le sens longitudinal d'une distance égale à la moitié du pas p entre trous d'une même série (figure 6). De cette manière, les trous qui débouchent sur les faces en contact de barreaux juxtaposés sont situés dans le prolongement les uns des autres et constituent les logements pour les quatre faisceaux de tiges cylindriques qui assurent le verrouillage intégral de l'édifice. Dans chaque faisceau, les tiges cylindriques sont régulièrement espacées.

Les plans P1, P2, P3, P4 des axes des trous 51, 52, 53, 54 sont de préférence distants chacun de la face du barreau la plus proche qui leur soit parallèle d'une distance égale au quart de largeur du côté du barreau. Ainsi, les faisceaux formés par les tiges 61, 62 sont constitués de séries alternées parallèles équidistantes, de même que les faisceaux formés par les tiges 63, 64.

La structure composite obtenue a une matrice en métal ductile formée par la juxtaposition des barreaux 40 et une structure de renfort 4D en métal à hautes caractéristiques mécaniques formée par les tiges cylindriques 61, 62, 63, 64.

La cohésion de cet assemblage peut être améliorée par une opération de compactage ayant pour effet de parfaire les contacts entre matrice et renfort, d'une part, et entre éléments de matrice, d'autre part. Suivant la nature des matériaux utilisés, leur sensibilité aux traitements thermiques, leurs coefficients de dilatation respectifs, leur affinité, ... le compactage est réalisable à la presse, en isostatique ou par tout autre moyen, à froid ou à chaud.

Exemple 3

Cet exemple concerne l'obtention d'une structure composite carbone-carbone associant étroitement une structure multidirectionnelle de renfort à base de fibres de carbone à une matrice entièrement constituée de carbone.

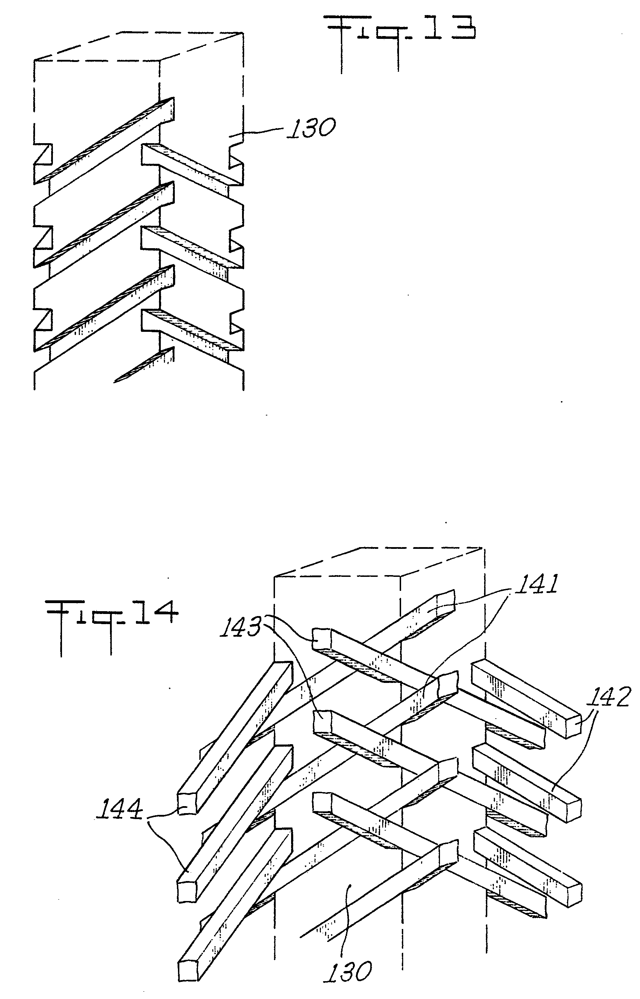

Les éléments de matrices sont des barreaux 70 rainurés en graphite tels que celui représenté sur la figure 7. Les éléments de renfort sont des baguettes cylindriques à section circulaire constituées de fibres de carbone liées rigidement entre elles par une résine polymérisée carbonisée avant ou après construction de la structure composite.

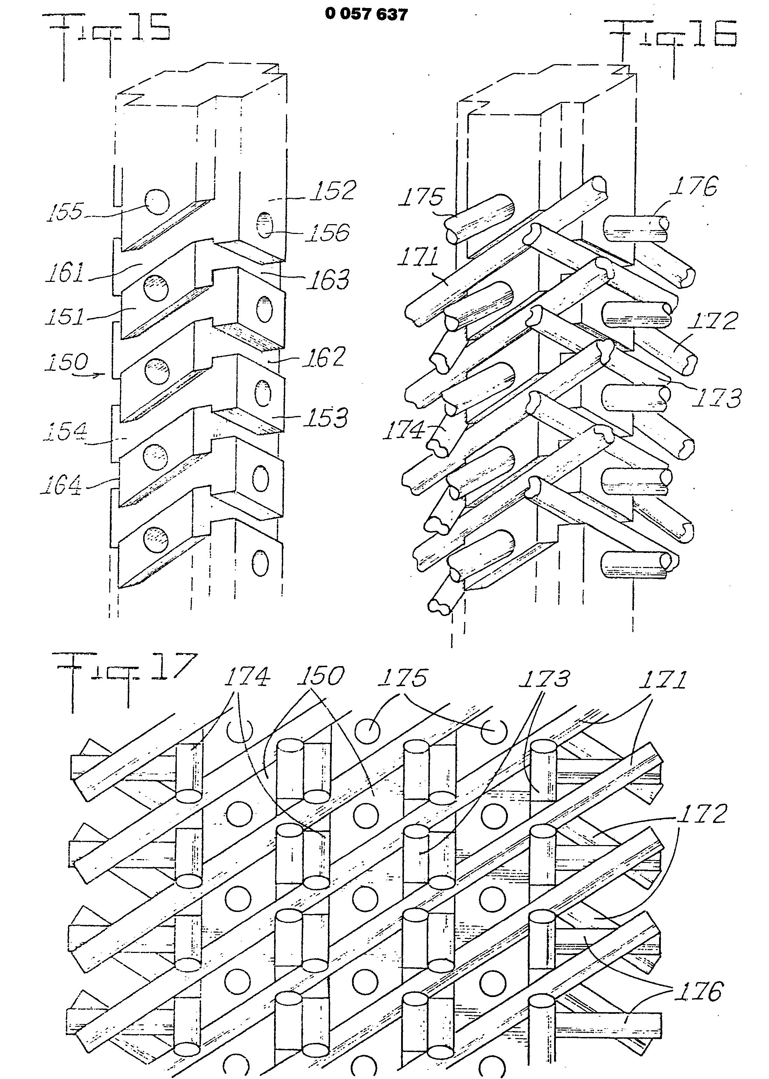

Chaque barreau 70 est prismatique à section s'inscrivant dans un carré de 15 mm de côté par exemple. Chaque face 71, 72, 73, 74 du barreau est entaillée par une série de rainures, respectivement 81, 82, 83, 84. Dans chaque série, les rainures sont parallèles entre elles et font par rapport à la direction longitudinale du barreau un angle oblique β. Cet angle est le même pour les quatre séries de rainures et égal environ à 56°19' (angle de tangente égale à 3/2). Les rainures de chaque série sont régulièrement espacées le long du barreau avec un pas de 10 mm. Comme on peut le voir sur la figure 7, et en supposant que le barreau est disposé verticalement, les rainures de deux faces adjacentes du barreau sont dirigées toutes vers le haut ou vers le bas à partir de l'arête séparant ces deux faces. Chaque arête est coupée alternativement et à intervalles réguliers (5 mm) par une rainure d'une face adjacente à cette arête et par une rainure de l'autre face adjacente à cette arête. Les arêtes du barreau 70 correspondant aux arêtes du prisme à section carrée circonscrit au barreau ne sont pas représentées, pour plus de clarté, sur les figures 7 et 8. Chaque arête étant coupée par les rainures des deux faces qu'elle sépare, elle présente des parties minces qui, si elles sont trop fragiles, pourraient se briser facilement lors de la construction de la structure et gêner ensuite l'introduction des éléments de renfort. Dans ce cas, on aura avantage à éliminer ces parties minces après usinage des rainures (ébarbage) ou à usiner des rainures dans un barreau dont les arêtes auront été supprimées comme c'est le cas pour le barreau de la figure 7.

Les rainures sont de section carrée de 3 mm de côté et sont obtenues par fraisage. Ces rainures sont disposées sur les quatre faces du barreau de manière que les baguetes de renfort de 3 mm de diamètre positionnées dans ces rainures se croisent sans interférer.

La figure 8 montre quatre familles de baguettes 91, 92, 93, 94 logées respectivement dans les quatre séries de rainures 81, 82, 83, 84.

La structure composite est construite en juxtaposant régulièrement les barreaux en sorte que les rainures des barreaux successifs se trouvent dans le prolongement les unes des autres (figure 9). On détermine ainsi les passages pour les baguettes de renfort qui assurent un verrouillage intégral de l'édifice et forment une structure multidirectionnelle de renfort de type 4D. Chaque faisceau est formé d'éléments de renfort parallèles entre eux et régulièrement espacés.

Un matériau composite de bonne qualité est obtenu en soumettant la structure composite ainsi fabriquée à des traitements supplémentaires visant à carboniser le cas échéant la résine liant les fibres constituant les éléments de renfort, à lier tous les éléments de matrice et de renfort qui ne sont qu'assemblés et à combler les espaces entre tous ces éléments, en particulier entre rainures carrées et baguettes rondes. Ces traitements supplémentaires consistent notamment à apporter une matière à l'état fluide ou éventuellement pulvérulent. Cet apport peut être réalisé en mettant en œuvre une technique connue de densification.

Exemple 4

Cet exemple concerne l'obtention d'un matériau composite carbone-carbone comportant, comme dans l'exemple 3, une structure multidirectionnelle de renfort 4D constituée de quatre faisceaux d'éléments de renfort et d'une matrice de carbone.

Les éléments de matrice sont des barreaux 100 rainurés en graphite tels que celui représenté sur la figure 10. Les éléments de renfort sont des baguettes cylindriques à section circulaire identiques à celles utilisées dans l'exemple 3.

Chaque barreau 100 est prismatique à section carrée de 15 mm de côté. Chaque face 101, 102, 103, 104 du barreau est entaillée par une série de rainures, respectivement 111, 112, 113, 114. Dans chaque série, les rainures sont parallèles entre elles et font toutes par rapport à la direction longitudinale du barreau un même angle oblique γ égal à 56° 19' environ. Les rainures de chaque série sont régulièrement espacées avec un pas de 10 mm.

Contrairement au cas de l'exemple 3, le barreau 100 étant vertical, les rainures de deux faces adjacentes sont orientées respectivement vers le haut pour une face et vers le bas pour l'autre face à partir de l'arête commune à ces deux faces.

Une autre différence entre les rainures du barreau 100 et celles du barreau 70 consiste en ce que les premières ont, en section transversale, une forme de U avec un fond semi-circulaire de 1,5 mm de rayon, la profondeur totale des rainures étant 3 mm. Ainsi, dans le cas présent, la forme des rainures est adaptée à celle des éléments de renfort qu'elles doivent recevoir.

La figure 11 montre quatre familles de baguettes 121, 122, 123, 124 logées respectivement dans les quatre séries de rainures 111, 112, 113, 114. On remarquera que, comme dans tous les autres exemples, les éléments de renfort s'inscrivent entièrement en section transversale dans les cavités formées dans les éléments de matrice.

Une structure composite est construite en juxtaposant régulièrement les barreaux en sorte que les rainures des barreaux successifs se trouvent dans le prolongement les unes des autres. On pourrait faire subir à cette structure composite des traitements supplémentaires analogues à ceux envisagés dans l'exemple 3.

On remarque, sur la figure 10, que les rainures de deux faces adjacentes sont séparées les unes des autres, le long de chaque arête, par des parties minces 105, en forme de « cornes ». Lorsque ces parties sont fragiles au point de se briser et de gêner éventuellement la mise en place des éléments de renfort, il est préférable de les éliminer. On obtient alors un barreau 100' « ébarbé » tel que celui illustré par la figure 12. Ce barreau 100' peut être utilisé exactement comme le barreau 100.

### Exemple 5

Cet exemple se distingue de l'exemple 3, d'une part, par le fait que les rainures formées dans chaque barreau prismatique 130 (figure 13) ont une section transversale carrée de 2 mm de côté, et, d'autre part, que les éléments de renfort sont des baguettes à section carrée de 2 mm de côté, et non à section circulaire. Ces baguettes 141, 142, 143, 144 sont représentées sur la figure 14.

On notera que la structure composite formée en juxtaposant les barreaux 130 de manière que les rainures de barreaux successifs soient dans le prolongement les unes des autres, et en mettant en place des baguettes dans tous les logements formés par ces rainures, ne présente pas de vide entre éléments de matrice et de renfort.

### Exemple 6

Cet exemple concerne l'obtention d'un matériau composite carbone-carbone comportant une structure multidirectionnelle de renfort 6D constituée de six faisceaux d'éléments de renfort et d'une matrice de carbone.

Les éléments de matrice sont des barreaux 150 de mêmes dimensions que les barreaux 70 décrits dans l'exemple 3 et comportant sur leurs faces 151, 152, 153, 154 des rainures 161, 162, 163, 164 de mêmes forme, dimensions, et disposition que les rainures 81, 82, 83, 84. En variante, les rainures 161, 162, 163, 164, tout en conservant les mêmes orientations sur les différentes faces du barreau que les rainures 81, 82, 83, 84, pourraient présenter une section transversale en forme de U identique à la section des rainures du barreau 100 de la figure 10.

Le barreau 150 se distingue du barreau 70 en ce qu'il comporte deux séries de trous 155, 156 (figure 15). Les trous 155 ont leurs axes situés dans le plan médian du barreau parallèle aux faces 153, 154 et sont perpendiculaires aux faces 151, 152 ; les trous 155 sont répartis régulièrement le long du barreau à raison d'un entre deux rainures consécutives 161 ou 162. De façon analogue, les trous 156 ont leurs axes situés dans le plan médian du barreau parallèle aux faces 151, 152 et sont perpendiculaires aux faces 153, 154 ; les trous 156 sont répartis régulièrement le long du barreau à raison d'un entre deux rainures consécutives 163 ou 164.

Les trous 155, 156 ont un diamètre de 3 mm pour recevoir respectivement des baguettes 175, 176 cylindriques et à section circulaires de 3 mm. Ces baguettes sont identiques aux baguettes 171, 172, 173, 174 disposées dans les rainures 161, 162, 163, 164 (figure 16) de la même manière que les baguettes 91, 92, 93, 94 dans les rainures 81, 82, 83, 84.

La structure composite est obtenue en juxtaposant les barreaux 150 de manière que les trous 155 soient alignés, de même que les trous 156 (figure 17). Les baguettes 171 à 176 étant ensuite mises en place, on obtient six faisceaux d'éléments de renfort dont deux faisceaux ont des directions perpendiculaires l'une à l'autre. Dans les faisceaux formés par les baguettes 155, 156, comme dans les autres faisceaux, les éléments de renfort sont régulièrement espacés les uns des autres.

On notera à ce propos que dans tous les exemples qui précèdent, chaque faisceau d'éléments de renfort est constitué d'éléments parallèles entre eux et régulièrement espacés.

La structure composite obtenue conformément à l'exemple 6 peut être densifiée par des traitements supplémentaires comme décrit dans l'exemple 3.

### Revendications

1. Procédé de fabrication d'une structure composite comportant des éléments de renfort linéaires formant des faisceaux différents constitués chacun d'une pluralité d'éléments de renfort parallèles à une même direction particulière et répartis dans tout le volume de la structure et une matrice remplissant au moins partiellement le volume de la structure entre les éléments de renfort, procédé selon lequel l'on utilise des parties de structure, solides préfabriquées et présentant chacune au moins une cavité s'étendant d'un côté à un autre de la partie de structure, l'on juxtapose les parties de structure de sorte que leurs cavités soient dans le prolongement les unes des autres et forment des logements rectilignes, et l'on introduit des éléments de renfort dans au moins une partie des logements rectilignes, caractérisé en ce que :

— l'on juxtapose des parties de structure constituant des éléments de matrice (10 ; 40 ; 70 ; 100 ; 100' ; 130 ; 150) de forme prismatique ou parallélépipédique dont les cavités (21-24 ; 51-54 ; 81-84 ; 111-114 ; 161-164 ; 155-156) sont orientées de manière à former, après juxtaposition des éléments de matrice, au moins quatre groupes de logements rectilignes constitués chacun d'une pluralité de logements parallèles à une même direction et répartis dans tous le volume occupé par les éléments de matrice juxtaposés, les directions des groupes de logements étant différentes les unes des autres et telles que, quel que soit le plan de l'espace considéré, il y en a toujours deux non parallèles entre elles et à ce plan, et,

— l'on introduit ensuite des éléments de renfort (31-34 ; 61-64 ; 91-94 ; 121-124 ; 141-144 ; 171-176) dans au moins une partie des logements de chaque groupe, de sorte que les éléments de renfort réalisent un verrouillage de l'assemblage d'éléments de matrice pour former une structure composite cohérente.

2. Procédé selon la revendication 1, caractérisé en ce que l'on soumet l'assemblage des éléments de matrice et de renfort à une opération de compactage.

3. Procédé selon l'une quelconque des revendications 1 et 2, caractérisé en ce que l'on complète l'assemblage des éléments de matrice et de renfort par adjonction d'une matière comblant au moins partiellement chaque espace libre entre éléments de matrice et de renfort.

4. Matrice destinée à la fabrication d'une structure composite comportant des éléments de renfort linéaires formant au moins quatre faisceaux différents constitués chacun d'une pluralité d'éléments de renfort parallèles à une même direction particulière et répartis dans tout le volume de la structure, les directions des divers faisceaux étant différentes les unes des autres et n'étant pas parallèles à un même plan, et une matrice remplissant au moins partiellement le volume de la structure entre les éléments de renfort, matrice caractérisée en ce qu'elle est formée par des éléments de matrice préfabriqués, solides (10 ; 40 ; 70 ; 100 ; 100' ; 130 ; 150) de forme prismatique ou parallélépipédique et présentant chacun au moins une cavité (21-24 ; 51-54 ; 81-84 ; 111-114 ; 161-165 ; 155-156) s'étendant d'un côté à un autre de l'élément de matrice, les éléments de matrice étant juxtaposés de manière que leurs cavités forment au moins quatre groupes de logements rectilignes constitués chacun d'une pluralité de logements parallèles à une même direction et répartis dans tout le volume occupé par les éléments de matrice juxtaposés, les directions des groupes de logements étant différentes les unes des autres et telles que, quel que soit le plan de l'espace considéré, il y en a toujours deux non parallèles entre elles et à ce plan.

5. Matrice selon la revendication 4, caractérisée en ce que chaque élément de matrice comporte des cavités orientées suivant au moins quatre directions différentes les unes des autres.

6. Matrice selon la revendication 5, caractérisée en ce qu'elle est formée d'éléments de matrice identiques entre eux.

7. Matrice selon l'une quelconque des revendications 4 à 6, caractérisée en ce que les cavités sont formées par des encoches (21-24) ou rainures (81-84 ; 111-114 ; 161-164).

8. Structure composite comportant des éléments de renfort linéaires formant au moins quatre faisceaux différents constitués chacun d'une pluralité d'éléments de renfort parallèles à une même direction particulière et répartis dans tout le volume de la structure, les directions des divers faisceaux étant différentes les unes des autres et n'étant pas parallèles à un même plan, et une matrice remplissant au moins partiellement le volume de la structure entre les éléments de renfort, caractérisée en ce que la matrice est formée par des éléments de matrice préfabriqués, solides (10 ; 40 ; 70 ; 100 ; 100' ; 130 ; 150) de forme prismatique ou parallélépipédique et présentant chacun au moins une cavité (21-24 ; 51-54 ; 81-84 ; 111-114 ; 161-164 ; 155-156) s'étendant d'un côté à un autre de l'élément de matrice, les éléments de matrice étant juxtaposés de manière que leurs cavités forment au moins quatre groupes de logements rectilignes constitués chacun d'une pluralité de logements parallèles à une même direction et répartis dans tout le volume occupé par les éléments de matrice juxtaposés, les directions des groupes de logements étant différentes les unes des autres et telles que, quel que soit le plan de l'espace considéré, il y en a toujours deux non parallèles entre elles et à ce plan, et en ce que les éléments de renfort (31-34 ; 61-64 ; 91-94 ; 121-124 ; 141-144 ; 171-176) sont introduits dans au moins une partie des logements de chaque groupe, de sorte que les éléments de renfort réalisent un verrouillage de l'assemblage d'éléments de matrice pour former une structure composite cohérente.

9. Structure composite selon la revendication 8, caractérisée en ce qu'elle est compactée.

10. Structure composite selon la revendication 8, caractérisée en ce qu'elle comprend en outre une matière introduite dans les intervalles entre éléments de renfort et de matrice.

11. Structure composite selon l'une quelconque des revendications 8 à 10, caractérisée en ce que les éléments de renfort qui occupent les cavités de chaque élément de matrice comprennent au moins un élément de renfort de chaque faisceau.

12. Structure composite selon la revendication 11, caractérisée en ce que les éléments de matrice sont identiques entre eux.

13. Structure composite selon l'une quelconque des revendications 8 à 12, caractérisée en ce que les cavités sont formées par des encoches (21-24) ou rainures (81-84 ; 111-114 ; 161-164).

14. Structure composite selon l'une quelconque des revendications 8 à 13, caractérisée en ce que chaque élément de renfort a une section transversale qui s'inscrit exactement à l'intérieur du périmètre de la section transversale de chaque cavité qu'il occupe.

## Claims

1. A method for the making of a composite structure comprising rectilinear reinforcing elements forming different bundles, each bundle consisting of a plurality of reinforcing elements parallel to a same particular direction and distributed in the whole volume of the structure, and a matrix filling at least part of the volume of the structure between the reinforcing elements, said method in which solid, prefabricated parts of the structure are used, each provided with at least one cavity extending from one face to another face of the part of the structure, and the parts of the structure are juxtaposed in such a way that the cavities thereof extend one from the other and form rectilinear housings, and reinforcing elements are introduced in at least a part of the rectilinear housings, characterized by :
— juxtaposing parts of the structure constituting matrix elements (10 ; 40 ; 70 ; 100 ; 100' ; 130 ; 150) having a prismatic or parallelepipedic form, in such a way that the cavities (21-24 ; 51-54 ; 81-84 ; 111-114 ; 161-164 ; 155-156) are oriented so as to define, after juxtaposition of the matrix elements, at least four groups of rectilinear housings, each group consisting in a plurality of housings parallel to a same direction and distributed in the whole volume occupied by the juxtaposed matrix elements and the directions of said groups of housings beings different from each other and such that, considering any plane of the space, at least two directions are not parallel to each other and to said plane ; and
— inserting thereafter reinforcing elements (31-34 ; 61-64 ; 121-124 ; 141-144 ; 171-176) in at least a part of the housings of each group, whereby a coherent composite structure is obtained with said reinforcing elements performing a locking of the assembled matrix elements.

2. Method according to claim 1, characterized in that the assembly of matrix elements and reinforcing elements is subjected to a compaction operation.

3. Method according to any one of claims 1 or 2, characterized in that the assembly of matrix and reinforcing elements is completed by the addition of a material to fill in at least partly each one of the voids left between the matrix and reinforcing elements.

4. Matrix for making a composite structure comprising rectilinear reinforcing elements forming at least four different bundles, each bundle consisting of a plurality of reinforcing elements parallel to a same particular direction and distributed in the whole volume of the structure, the directions of the different bundles being different from each other and not being parallel to a same plane, and a matrix filling at least part of the volume of the structure between the reinforcing elements, characterized in that it is constituted by solid, prefabricated matrix elements (10 ; 40 ; 70 ; 100 ; 100' ; 130 ; 150) of parallelepipedic or prismatic form and each provided with at least one cavity (21-24 ; 51-54 ; 81-84 ; 111-114 ; 161-164 ; 155-156) extending from one face to another face of the matrix element, said matrix elements being juxtaposed so that said cavities form at least four groups of rectilinear housings, each group consisting in a plurality of housings parallel to a same direction and distributed in the whole volume occupied by the juxtaposed matrix elements and the directions of said groups of housings being different from each other and such that, considering any plane of the space, at least two directions are not parallel to each other and to said plane.

5. Matrix according to claim 4, characterized in that each matrix element comprises cavities oriented in at least four directions different from each other.

6. Matrix according to claim 5, characterized in that all the matrix elements are identical.

7. Matrix according to anyone of claims 4 to 6, characterized in that the cavities are shaped as grooves (21-24) or slots (81-84 ; 111-114 ; 161-164).

8. A composite structure comprising rectilinear reinforcing elements forming at least four different bundles, each bundle consisting of a plurality of reinforcing elements parallel to a same particular direction and distributed in the whole volume of the structure, the directions of the different bundles being different from each other and not being parallel to a same plane, and a matrix filling at least part of the volume of the structure between the reinforcing elements, characterized in that said matrix comprises solid, prefabricated matrix elements (10 ; 40 ; 70 ; 100 ; 100' ; 130 ; 150) of parallelepipedic or prismatic form and each provided with at least one cavity (21-24 ; 51-54 ; 81-84 ; 111-114 ; 161-164 ; 155-156) extending from one face to another face of the matrix element, said matrix elements being juxtaposed so that said cavities form at least four groups of rectilinear housings, each group consisting in a plurality of housings, parallel to a same direction and distributed in the whole volume occupied by the juxtaposed matrix elements and the directions of said groups of housings being different from each other and such that, considering any plane of the space, at least two directions are not parallel to each other and to said plane ; and said reinforcing elements (31-34 ; 61-64 ; 91-94 ; 121-124 ; 141-144 ; 171-176) are arranged in at least a part of the housings of each group, whereby a coherent composite structure is provided with said reinforcing elements performing a locking of the assembled matrix elements.

9. A composite structure according to claim 8, characterized in that it is compacted.

10. A composite structure according to claim 8, characterized in that it further comprises a material introduced in the voids between the reinforcing and matrix elements.

11. A composite structure according to any one of claims 8 to 10, characterized in that the reinforcing elements occupying the cavities of each matrix element comprise at least one reinforcing element of each bundle.

12. Composite structure according to claim 11, characterized in that the matrix elements are all identical.

13. Composite structure according to any one of claims 8 to 12, characterized in that the matrix elements are provided with cavities shaped as grooves (21-24) or slots (81-84 ; 111-114 ; 161-164).

14. Composite structure according to any one of claims 8 to 13, characterized in that each reinforcing element has a cross-section which is contained inside the perimeter of the cross-section of each cavity inside which it is housed.

**Ansprüche**

1. Verfahren zur Herstellung einer Verbundstruktur mit linearen Verstärkungselementen, die verschiedene, jeweils aus einer Mehrzahl von zu ein- und derselben bestimmten Richtung parallelen und über das gesamte Volumen der Struktur verteilten Verstärkungselementen bestehenden Bündel bilden, und mit einer das Volumen der Struktur zwischen den Verstärkungselementen zumindest teilweise ausfüllenden Matrix, bei welchem Verfahren feste Fertigbauteile verwendet werden, die jeweils zumindest einen sich von einer Seite der Struktur zur anderen erstreckenden Hohlraum aufweisen, die Bauteile derart in Juxtaposition gebracht werden, daß ihre Hohlräume in Verlängerung zueinander stehen und geradlinige Aufnahmen bilden, und in zumindest einen Teil der geradlinien Aufnahmen Verstärkungselemente eingebracht werden, dadurch gekennzeichnet, daß

— aus prismatischen oder parallelepipedischen Matrixelementen (10 ; 40 ; 70 ; 100 ; 100' ; 130 ; 150) bestehende Bauteile aneinandergereiht werden, deren Hohlräume (21-24 ; 51-54 ; 81-84 ; 111-114 ; 161-164 ; 155-156) so gerichtet sind, daß sie nach Aneinanderreihung der Matrixelemente zumindest vier Gruppen von geradlinigen Aufnahmen bilden, wobei jede Gruppe aus einer Mehrzahl von in ein und derselben Richtung parallelen und über das gesamte von den aneinandergereihten Matrixelementen eingenommene Volumen verteilten Aufnahmen besteht und die Richtungen der Aufnahmegruppen voneinander verschieden und derart sind, daß immer zwei davon nicht parallel zueinander und zu einer beliebigen Ebene des betroffenen Raumes sind, und

— danach Verstärkungselemente (31-34 ; 61-64 ; 91-94 ; 121-124 ; 141-144 ; 171-176) in zumindest einen Teil der Aufnahmen jeder Gruppe derart eingebracht werden, daß die Verstärkungselemente zur Bildung einer kohärenten Verbundstruktur ein Verblocken des Verbandes von Matrixelementen bewirken.

2. Verfahren nach Anspruch 1, dadurch gekennzeichnet, daß der Verband von Matrix- und Verstärkungselementen einem Verdichtungsprozeß unterworfen wird.

3. Verfahren nach einem der Ansprüche 1 und 2, dadurch gekennzeichnet, daß der Verband von Matrix- und Verstärkungselementen durch Anbringen eines jeden freien Raum zwischen Matrix- und Verstärkungselementen zumindest teilweise füllenden Materials komplettiert wird.

4. Matrix zur Herstellung einer Verbundstruktur mit linearen Verstärkungsmitteln, die zumindest vier verschiedene, jeweils aus einer Mehrzahl von zu ein- und derselben bestimmten Richtung parallelen und über das gesamte Volumen der Struktur verteilten Verstärkungselementen bestehenden Bündel bilden, wobei die Richtungen der verschiedenen Bündeln voneinander verschieden und nicht parallel zu ein- und derselben Ebene sind, und mit einer das Volumen der Struktur zwischen den Verstärkungselementen zumindest teilweise ausfüllenden Matrix, welche Matrix dadurch gekennzeichnet ist, daß sie durch prismatische oder parallelepipedische vorgefertigte feste Matrixelemente (10 ; 40 ; 70 ; 100 ; 100' ; 130 ; 150) gebildet ist, die jeweils zumindest einen sich von einer Seite des Matrixelements zur anderen erstreckenden Hohlraum (21-24 ; 51-54 ; 81-84 ; 111-114 ; 161-164 ; 155-156) aufweisen, wobei die Matrixelemente derart aneinandergereiht sind, daß ihre Hohlräume zumindest vier Gruppen von geradlinigen Aufnahmen bilden, wobei jede Gruppe aus einer Mehrzahl von in ein- und derselben Richtung parallelen und über das gesamte von den aneinandergereihten Matrixelementen eingenommene Volumen verteilten Aufnahmen besteht und die Richtungen der Aufnahmegruppen voneinander verschieden und derart sind, daß immer zwei davon nicht parallel zueinander und zu einer beliebigen Ebene des betroffenen Raumes sind.

5. Matrix nach Anspruch 4, dadurch gekennzeichnet, daß jedes Matrixelement in zumindest vier voneinander verschiedene Richtungen gerichtete Hohlräume aufweist.

6. Matrix nach Anspruch 5, dadurch gekennzeichnet, daß sie durch untereinander identische Matrixelemente gebildet ist.

7. Matrix nach einem der Ansprüche 4 bis 6, dadurch gekennzeichnet, daß die Hohlräume durch Kerben (21 bis 24) oder Rillen (81 bis 84 ; 111-114 ; 161-164) gebildet sind.

8. Verbundstruktur mit linearen Verstärkungsmitteln, die zumindest vier verschiedene, jeweils aus einer Mehrzahl von zu ein- und der derselben bestimmten Richtung parallelen und über das gesamte Volumen der Struktur verteilten Verstärkungselementen bestehenden Bündel bilden, wobei die Richtungen der verschiedenen Bündeln voneinander verschieden und nicht parallel zu ein- und derselben Ebene sind, und mit einer das Volumen der Struktur zwischen den Verstärkungselementen zumindest teilweise ausfüllenden Matrix, dadurch gekennzeichnet, daß die Matrix durch prismatische oder parallelepipedische vorgefertigte feste Matrixelemente (10 ; 40 ; 70 ; 100 ; 100' ; 130 ; 150) gebildet ist, die jeweils zumindest einen sich von einer Seite des Matrixelementes zur anderen erstreckenden Hohlraum (21-24 ; 51-54 ; 81-84 ; 111-114 ; 161-164 ; 155-156) aufweisen, wobei die Matrixelemente derart aneinandergereiht sind, daß ihre Hohlräume zumindest vier Gruppen von geradlinigen Aufnahmen bilden, wobei jede Gruppe aus einer Mehrzahl von in ein- und derselben Richtung parallelen und über das gesamte von den aneinandergereihten Matrixelementen eingenommene Volumen verteilten Aufnahmen besteht und die Richtungen der Aufnahmegruppen voneinander verschieden und derart sind, daß immer zwei davon nicht parallel zueinander und zu einer beliebigen Ebene des betroffenen Raumes sind, und daß die Verstärkungselemente (31-34 ; 61-64 ; 91-94 ; 121-124 ; 141-144 ; 171-176) in zumindest einen Teil der Aufnahmen jeder Gruppe derart eingebracht werden, daß die Verstärkungselemente zur Bildung einer kohärenten Verbundstruktur ein Verblocken des Verbandes von Matrixelementen bewirken.

9. Verbundstruktur nach Anspruch 8, dadurch gekennzeichnet, daß sie verdichtet ist.

10. Verbundstruktur nach Anspruch 8, dadurch gekennzeichnet, daß sie weiters ein in die Zwischenräume zwischen den Verstärkungs- und Matrixelementen eingebrachtes Material umfaßt.

11. Verbundstruktur nach einem der Ansprüche 8 bis 10, dadurch gekennzeichnet, daß die die Hohlräume jedes Matrixelementes einnehmenden Verstärkungselemente zumindest ein Verstärkungselement jedes Bündels umfassen.

12. Verbundstruktur nach Anspruch 11, dadurch gekennzeichnet, daß die Matrixelemente untereinander identisch sind.

13. Verbundstruktur nach einem der Ansprüche 8 bis 12, dadurch gekennzeichnet, daß die Hohlräume durch Kerben (21 bis 24) oder Rillen (81-84 ; 111-114 ; 161-164) gebildet sind.

14. Verbundstruktur nach einem der Ansprüche 8 bis 13, dadurch gekennzeichnet, daß jedes Verstärkungselement einen Querschnitt aufweist, der genau in das Innere des Umfangs des Querschnitts jedes von ihm eingenommenen Hohlraums paßt.

Fig. 1

Fig. 2

Fig. 3

Fig-4

Fig-5

Fig.6

Fig.12

Fig.7

70

74

72

β

β

84

82

83

71

73

81

Fig.8

91

92

94

93

Fig.9

94    93    91    70    92

5

Fig. 10

111
γ
114
104
105
101

100
105
113
112
102
103

Fig. 11

121
122
123
124
100

6

Fig. 13

130

Fig. 14

141

143

142

144

130

Fig. 15

155
152
156
161
163
151
150
162
154
153
164

Fig. 16

175
176
171
172
173
174

Fig. 17

174  150  175  173  171

172

176